# NEUE EUROPÄISCHE PATENTSCHRIFT

(11) **EP 1 504 803 B2**
(45) Veröffentlichungstag und Bekanntmachung des Hinweises auf die Entscheidung über den Einspruch: **05.12.2012**
(45) Hinweis auf die Patenterteilung: 06.05.2009
(21) Anmeldenummer: 04018176.0
(22) Anmeldetag: 30.07.2004
(51) Int. Cl.: B01D 46/12

(54) **Luft-Filter, insbesondere Kfz-Innenraumfilter**
Air filter, in particular for passenger compartment of vehicles
Filtre à air, notamment pour l' habitacle intérieur d' un véhicule automobile

(30) Priorität: 06.08.2003 DE 10336378
(43) Veröffentlichungstag der Anmeldung: 09.02.2005
(73) Patentinhaber: Behr GmbH & Co. KG, 70469 Stuttgart (DE)
(72) Erfinder: Boschert, Björn, 71254 Ditzingen (DE)
(74) Vertreter: Grauel, Andreas

(56) Entgegenhaltungen:
- WO-A-99/37384
- DE-A1- 4 004 501
- DE-C1- 4 338 100
- FR-A- 1 448 425
- US-A- 3 853 519
- US-A- 5 797 975
- US-B1- 6 485 538
- PATENT ABSTRACTS OF JAPAN Bd. 1999, Nr. 05, 31. Mai 1999 (1999-05-31) & JP 11 033330 A (TORAY IND INC), 9. Februar 1999 (1999-02-09)
- PATENT ABSTRACTS OF JAPAN Bd. 2002, Nr. 12, 12. Dezember 2002 (2002-12-12) & JP 2002 239325 A (DAIKIN IND LTD), 27. August 2002 (2002-08-27)
- DATABASE WPI Section Ch, Week 198042 Derwent Publications Ltd., London, GB; Class J01, AN 1980-74869C XP002301253 & SU 719 673 A (GRINBERG L N) 15. März 1980 (1980-03-15)

## Beschreibung

Die Erfindung betrifft ein Verfahren nach dem Oberbegriff von Anspruch 1.

Kfz-Innenraumfilter werden herkömmlicher Weise mittels entsprechender Aufnahmen in Klimageräten fixiert. Ferner ist das Vorsehen von stabilisierenden Rahmen bekannt, in denen der Luft-Filter aufgenommen ist.

Um einen hohen Abscheidegrad an Partikeln und gasförmigen Substanzen realisieren zu können, muss der Luft-Filter gegenüber dem Filtergehäuse und der Umgebung abgedichtet werden, so dass keine Luft am Luft-Filter vorbeiströmen kann.

Häufig ist aus Bauraumgründen nicht genügend Raum im Servicefall vorhanden, um den alten Luft-Filter auszubauen und den neuen Luft-Filter einzubauen, weshalb es erforderlich ist, den Luft-Filter mehrteilig auszugestalten und die einzelnen Filter-Teile nacheinander einzubauen. Mögliche Lösungen werden in der DE 43 38 100 C1 und in der DE 40 04 501 A1 offenbart.

Für die Abdichtung der Luft-Filter gegenüber dem Filtergehäuse werden üblicherweise Schaumstoff-Dichtungen aus PE oder PU, Vliesstoffe, flexible Kunststofflippen oder formschlüssige Verbindungen des Filterrahmens mit dem Filtergehäuse verwendet.

Insbesondere bei mehrteiligen Luft-Filtern treten häufig Undichtheiten und eine hiermit verbundene schlechte Gesamtabscheidung auf.

Es ist Aufgabe der Erfindung, einen verbessertes Verfahren zum Einbau eines Luft-Filters zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche.

Erfindungsgemäß ist ein Luft-Filter, insbesondere ein Kfz-Innenraumfilter zum Einbau in ein Filtergehäuse, vorgesehen, wobei der Luft-Filter einen Rahmen aufweist, welcher auf einer ersten Seite einen Vorsprung und auf einer dieser ersten Seite gegenüberliegenden Seite eine zur Aufnahme des Vorsprunges entsprechend profilierte Vertiefung aufweist, wobei sowohl der Vorsprung als auch die Vertiefung bevorzugt im Wesentlichen von einer Seite zur anderen Seite des Rahmens durchgehend ausgebildet sind.

Bevorzugt erstreckt sich der Vorsprung über-zwei, insbesondere über drei benachbarte Seiten des Rahmens und dient der Positionierung und Fixierung in einem Filtergehäuse, sowie der Abdichtung des Rahmens gegenüber dem Filtergehäuse. Hierfür weist das Filtergehäuse eine entsprechende Vertiefung auf, wobei in der Vertiefung oder an den Flächen des Vorsprunges zusätzliche Dichtelemente angeordnet sein können.

Vorzugsweise sind der Vorsprung federartig und die Vertiefung nutartig ausgebildet, insbesondere mit einem Querschnitt mit im Wesentlichen parallel beziehungsweise senkrecht zueinander verlaufenden Flächen, jedoch sind auch keilförmige Ausgestaltungen möglich.

Alternativ kann der Vorsprung und/oder die Vertiefung durch ein L-förmiges Profil gebildet sein.

Der Vorsprung kann auch ein teilkreisartiges Profil und die Vertiefung ein C-förmiges Profil aufweisen, gegebenenfalls auch mit einer Hinterschneidung, so dass auch Zugkräfte übertragen werden können. Ein derartiges Profil hat den Vorteil, dass die einzelnen Luft-Filter nicht in einer Ebene angeordnet sein müssen, sondern kurvenartig angeordnet sein können, so dass die Gestaltungsvielfalt erhöht wird. Im Falle einer ausreichenden Hinterschneidung ist für eine Demontage ausreichend, wenn lediglich die letzten beiden Luft-Filter zugänglich sind. Andersartige, beispielsweise clips-artige Verbindungen sind ebenfalls möglich.

Eine entsprechende Funktion wird auch durch eine zweiteilige Ausgestaltung realisiert, wobei eine nutartige Vertiefung mit einem Einlegeteil oder verbindenden Element zusammen den Vorsprung ersetzen.

Bevorzugt weist das verbindende Element einen im Wesentlichen rechteckförmigen Querschnitt auf und erstreckt sich über die Gesamte Länge der nutartigen Vertiefung, jedoch sind auch andere Ausgestaltungen, beispielsweise mit Hinterschneidungen auf beiden Seiten, möglich.

Vorzugsweise handelt es sich beim Rahmen um ein Kunststoff-Spritzgussteil, welches das Filtermaterial einschließt. Dies ermöglicht bei großen Stückzahlen eine preiswerte Herstellung.

Im Folgenden wird die Erfindung anhand dreier Ausführungsbeispiele unter Bezugnahme auf die Zeichnung im Einzelnen erläutert. In der Zeichnung zeigen:
- Fig. 1: eine vereinfacht dargestellte Ansicht des ersten Ausführungsbeispiels eines erfindungsgemäßen Luft-Filters,
- Fig. 2: einen Schnitt durch Fig. 1 entlang der Linie II-II,
- Fig. 3: eine schematische Darstellung des Einbaus einer Mehrzahl von Luft-Filtern gemäß dem ersten Ausführungsbeispiels,
- Fig. 4: einen Schnitt durch einen Verbindungsbereich zweier miteinander verbundener Luft-Filter gemäß dem zweiten Ausführungsbeispiel,
- Fig. 5: einen Schnitt durch den Verbindungsbereich zwischen dem Filtergehäuse und dem ersten eingebauten Luft-Filter,
- Fig. 6: einen Schnitt durch den Verbindungsbereich zweier miteinander verbundener Luft-Filter gemäß dem dritten Ausführungsbeispiel, und
- Fig. 7: vier miteinander verbundene Luft-Filter gemäß dem dritten Ausführungsbeispiel.

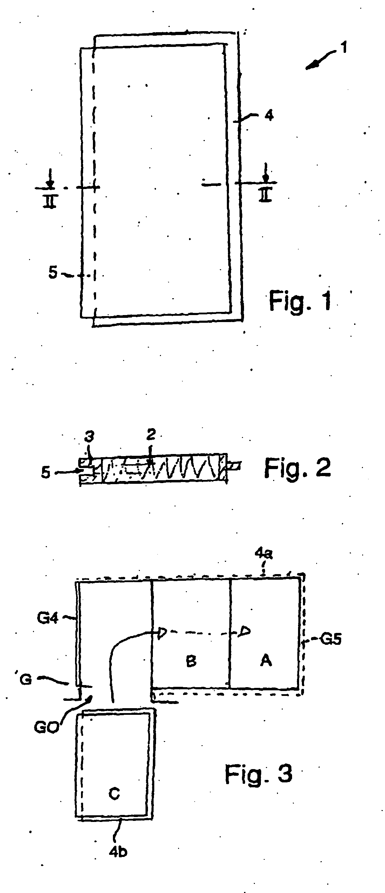

Ein erfindungsgemäßer Luft-Filter 1 zum Einbau in einem Filtergehäuse G einer Kfz-Klimaanlage (in Fig. 3 angedeutet) besteht aus einem Filtermaterial 2 und einem rechteckförmigen Kunststoff-Rahmen 3, wobei das Filtermaterial 2 in den Kunststoff-Rahmen 3 eingespritzt ist. Die Rahmenbreite des Kunststoff-Rahmens 3 ist hierbei derart bemessen, dass ein Optimum zwischen Filterfläche und Stabilität des Kunststoff-Rahmens 3 erreicht wird, so dass ein ausreichend sicherer Betrieb gewährleistet ist. Hierbei ist auch eine ausreichende Einbindung des Filtermaterials 2 in den Kunststoff-Rahmen 3 zu berücksichtigen.

Der Kunststoff-Rahmen 2 weist auf drei Seiten einen federartigen Vorsprung 4 und auf der vierten Seite eine nutartige Vertiefung 5 auf (vgl. Fig. 1 und 2). Die Dicke des federartigen Vorsprunges 4 entspricht etwa einem Drittel der Dicke des Kunststoff-Rahmens 2. Die Breite der nutartigen Vertiefung 5 entspricht etwa der Dicke des federartigen Vorsprunges 4.

Der Einbau in ein in Fig. 3 nur angedeutetes Filtergehäuse G erfolgt in einem ersten Schritt durch Einführen des Luft-Filters 1 durch eine im Filtergehäuse G vorgesehene Einbauöffnung GO in Längsrichtung des Filters 1, wobei die nutartige Vertiefung 5 in dieser Richtung, im Folgenden als erste Einbaurichtung bezeichnet (verläuft in Fig. 3 nach oben), verläuft. Zur sauberen Einführung der Filter 1 und Positionierung und Fixierung des zuletzt einzubauenden Filters 1 ist auf der in Fig. 3 links dargestellten Seite des Filtergehäuses G ein federartiger Vorsprung G4 vorgesehen, welche dem federartigen Vorsprung 4 entspricht.

Gelangt der in der ersten Einbaurichtung vorne liegende federartige Vorsprung 4a in eine entsprechende, im Filtergehäuse vorgesehene nutartige Vertiefung, so wird der Filter 1 weiter in eine Richtung senkrecht zur ersten Einbaurichtung weiter verschoben, wobei der in Einschubrichtung hinten liegenden federartige Vorsprung 4b in eine zweite, im Filtergehäuse vorgesehene nutartige Vertiefung eingeführt und in dieser weitergeschoben wird. Diese weitere Einbaurichtung wird im Folgenden als zweite Einbaurichtung (in Fig. 3 nach rechts) bezeichnet.

Ist der erste Filter 1, weit genug in die zweite Einbaurichtung geschoben, dass die Einbauöffnung GO vollständig freigegeben ist, wird ein weiterer Filter 1 entsprechend in das Filtergehäuse G eingeführt und in die zweite Einschubrichtung geschoben, wobei der federartige Vorsprung 4 des zweiten Filters 1 (in Fig. 3 mit B bezeichnet), in die nutartige Vertiefung 5 des zuerst eingeführten Filters 1 (in Fig. 3 mit A bezeichnet) gelangt.

Dieser Vorgang kann wiederholt werden, bis der zuerst eingeführte Filter 1 mit seinem federartigen Vorsprung 4 in eine dritte, im Filtergehäuse G vorgesehene nutartige Vertiefung gelangt, so dass dieser Filter 1 und sämtliche weiteren Filter 1 ihre Endposition erreicht haben, wobei der letzte Filter 1 (in Fig. 3 mit C bezeichnet) in seiner nutartigen Vertiefung 5 den federartigen Vorsprung G4 des Filtergehäuses G aufnimmt. Nach dem Einbau des letzten Filters 1 wird die Einbauöffnung verschlossen, wobei die Verschlussvorrichtung (nicht dargestellt) eine nutartige Vertiefung zur Aufnahme des federartigen Vorsprunges 4b aufweist.

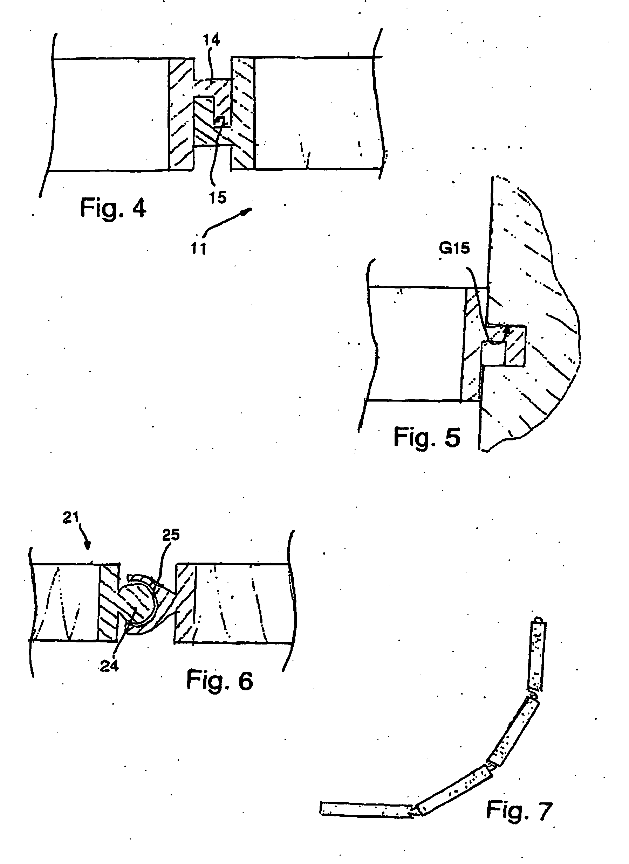

In den Figuren 4 und 5 ist ein zweites Ausführungsbeispiel dargestellt, wobei der federartige Vorsprung 14 der Luft-Filter 11 L-förmig ausgebildet ist und mit einer L-förmig ausgebildeten Vertiefung 15 zusammenwirkt, welche vorliegend entsprechend dem federartigen Vorsprung 14 ausgebildet ist. Im Filtergehäuse G sind hierbei gemäß dem vorliegenden Ausführungsbeispiel lediglich nutartige Vertiefungen G15 vorgesehen, ein federartiger Vorsprung entfällt. Der Vorteil dieser L-förmig ausgebildeten, d.h. hinterschneidenden Ausgestaltung, ist, dass zwischen den einzelnen Filtern 11 auch Zugkräfte übertragen werden können. Dies kann bei der Demontage vorteilhaft sein, da nur der letzte und der vorletzte Filter 11 zugänglich sein müssen, um alle Filter 11 zu entfernen.

Die Figuren 6 und 7 zeigen ein drittes Ausführungsbeispiel, bei dem die Verbindungen zwischen den einzelnen Luft-Filtern 21 gelenkig miteinander verbunden sind, so dass die Filter 21 auch eine kurvenförmige Anordnung in eingebautem Zustand haben können.

Hierfür sind die federartigen Vorsprünge 24 mit einem Kreisprofil und die nutartigen Vertiefungen mit einer C-förmigen Vertiefung 25 versehen, wobei gemäß dem vorliegenden Ausführungsbeispiel keine Hinterschneidung vorgesehen ist, diese ist jedoch prinzipiell möglich (vgl. zweites Ausführungsbeispiel) und kann bei der Demontage vorteilhaft sein, da nur der letzte und der vorletzte Filter zugänglich sein müssen.

Gemäß einem weiteren, nicht in der Zeichnung dargestellten Ausführungsbeispiel ist an Stelle des federartigen Vorsprunges 4 gemäß dem ersten Ausführungsbeispiel eine nutartige Vertiefung vorgesehen, in die ein verbindendes Element, vorliegend eine etwa rechteckförmig ausgebildete Feder, eingeführt ist, so dass die Feder die Funktion des federartigen Vorsprunges 4 erfüllt. Hierbei kann die Ausgestaltung beispielsweise der linken Seite der Figuren 1 und 2 entsprechen, und die Feder kann eine Breite aufweisen, die etwa der doppelten Tiefe der nutartigen Vertiefung entspricht. Eine derartige Ausgestaltung hat den Vorteil der Richtungsunabhängigkeit beim Einführen. Ferner kann die Feder aus einem anderen, versteifenden Material gefertigt sein, so dass sich die Steifigkeit des Luft-Filters erhöht.

### Bezugszeichenliste

- 1, 11, 21: Filter
- 2: Filtermaterial
- 3: Kunststoff-Rahmen
- 4, 14, 24: federartiger Vorsprung
- 4a: federartiger Vorsprung
- 4b: federartiger Vorsprung
- 5, 15, 25: nutartige Vertiefung

- A, B, C: Filter
- G: Filtergehäuse
- G4: federartiger Vorsprung
- G5, G15: nutartige Vertiefung
- GO: Gehäuseöffnung

## Patentansprüche

1. Verfahren zum Einbau von einem ersten Luft-Filter und einem zweiten Luft-Filter (1; 11; 21) und zumindest einem weiteren Luft-Filter in ein Filtergehäuse (G) einer Klimaanlage, wobei der erste und der zweite und der zumindest eine weitere Luft-Filter (1; 11; 21) jeweils einen Rahmen (3) aufweisen, welcher auf einer ersten Seite einen Vorsprung (4; 14; 24) und auf einer dieser ersten Seite gegenüberliegenden Seite eine zur Aufnahme eines Vorsprunges (4; 14; 24) entsprechend profilierte Vertiefung (5; 15; 25) aufweist, **dadurch gekennzeichnet, dass** der erste Luft-Filter (1; 11; 21) zuerst in einer ersten Einschubrichtung durch eine Gehäuseöffnung (GO) in das Filtergehäuse (G) eingeführt und anschließend in eine zweite Einschubrichtung geschoben wird, wobei die zweite Einschubrichtung senkrecht zur ersten Einschubrichtung ausgerichtet ist, anschließend der zweite Luft-Filter in der ersten Einschubrichtung durch die Gehäuseöffnung (GO) in das Filtergehäuse (G) eingeführt wird, wobei ein Vorsprung eines der Luft-Filter in eine Vertiefung des anderen Luft-Filters eingreift und danach in eine zweite Einschubrichtung geschoben wird, wobei ein letzter Filter nur in die erste Richtung eingeschoben wird.

2. Verfahren nach Anspruch 1, **dadurch gekennzeichnet, dass** ein Luft-Filter verwendet wird, welcher einen Vorsprung aufweist, der sich über zwei oder drei benachbarte Seiten des Rahmens (3) erstreckt.

3. Verfahren nach Anspruch 1 oder 2, **dadurch gekennzeichnet, dass** der Vorsprung (4; 14; 24) federartig und die Vertiefung (5; 15; 25) nutartig ausgebildet ist.

4. Verfahren nach einem der Ansprüche 1 bis 3, **dadurch gekennzeichnet, dass** der Vorsprung (14) durch ein L-förmiges Profil gebildet ist.

5. Verfahren nach einem der Ansprüche 1 bis 4, **dadurch gekennzeichnet, dass** die Vertiefung (15) durch ein L-förmiges Profil gebildet ist.

6. Verfahren nach einem der vorhergehenden Ansprüche, **dadurch gekennzeichnet, dass** der Vorsprung (24) ein teilkreisartiges Profil und die Vertiefung (25) ein C-förmiges Profil aufweisen.

7. Verfahren nach einem der vorhergehenden Ansprüche, **dadurch gekennzeichnet, dass** der Vorsprung und die Vertiefung eine Art Clips-Verbindung bilden und/oder dass der Vorsprung einen Bereich der Vertiefung hintergreift.

8. Verfahren nach einem der vorhergehenden Ansprüche, **dadurch gekennzeichnet, dass** der Vorsprung einen im Wesentlichen rechteckförmigen Querschnitt aufweist.

9. Verfahren nach einem der vorhergehenden Ansprüche, **dadurch gekennzeichnet, dass** der Rahmen als Kunststoff-Spritzgussteil ausgebildet ist.

10. Verfahren nach einem der vorhergehenden Ansprüche, **dadurch gekennzeichnet, dass** der Rahmen zwei federartig ausgebildete Seiten aufweist, welche zur Aufnahme, Führung und Fixierung in nutartigen Vertiefungen im Filtergehäuse dienen.

## Claims

1. Method for installing a first air filter and a second air filter (1; 11; 21) and at least one further air filter into a filter housing (G) of an air conditioning system, wherein each of the first and second and at least one further air filters (1; 11; 21) comprises a frame (3) which is provided on a first side with a projection (4; 14; 24) and on a side opposite said first side with a recess (5; 15; 25) suitably contoured for the accommodation of a projection (4; 14; 24), **characterised in that** the first air filter (1; 11; 21) is first introduced into the filter housing (G) through a housing opening (GO) in a first insertion direction and then pushed in a second insertion direction, the second insertion direction being oriented perpendicular to the first insertion direction, following which the second air filter is introduced into the filter housing (G) through the housing opening (GO) in the first insertion direction, a projection of one of the air filters engaging a recess of the other air filter and then being pushed in a second insertion direction, a last filter being pushed only in the first direction.

2. Method according to claim 1, **characterised in that** an air filter with a projection extending along two or three adjacent sides of the frame (3) is used.

3. Method according to claim 1 or 2, **characterised in that** the projection (4; 14; 24) is designed tongue-like while the recess (5; 15; 25) is designed groove-like.

4. Method according to any of claims 1 to 3, **characterised in that** the projection (14) is represented by an L-shaped profile.

5. Method according to any of claims 1 to 4, **characterised in that** the recess (15) is represented by an L-shaped profile.

6. Method according to any of the preceding claims, **characterised in that** the projection (24) has a circular arc profile while the recess (25) has a C-shaped profile.

7. Method according to any of the preceding claims, **characterised in that** the projection and the recess form a type of clip connection and/or **in that** the projection engages a region of the recess from behind.

8. Method according to any of the preceding claims, **characterised in that** the projection has a substantially rectangular cross-section.

9. Method according to any of the preceding claims, **characterised in that** the frame is a plastic infection-moulded part.

10. Method according to any of the preceding claims, **characterised in that** the frame has two sides of like design suitable for accommodation, guidance and retention in groove-like recesses in the filter housing.

## Revendications

1. Procédé de montage d'un premier filtre à air et d'un deuxième filtre à air (1; 11; 21) et d'au moins un autre filtre à air dans un logement de filtre (G) d'un système de climatisation, où le premier et le deuxième filtres à air et l'autre filtre à air au moins au nombre de un (1; 11; 21) présentent respectivement un cadre (3) qui, sur un premier côté, comporte une partie saillante (4; 14; 24), et, sur un côté placé à l'opposé de ce premier côté, comporte un creux (5; 15; 25) profilé en conséquence et servant au logement d'une partie saillante (4; 14; 24), **caractérisé en ce que** le premier filtre à air (1; 11; 21) est d'abord, suivant une première direction d'insertion, introduit dans le logement de filtre (G), par une ouverture de logement (GO) et, ensuite, poussé suivant une deuxième direction d'insertion, où la deuxième direction d'insertion est orientée perpendiculairement à la première direction d'insertion, puis le deuxième filtre à air est, suivant la première direction d'insertion, introduit dans le logement de filtre (G), par l'ouverture de logement (GO), où une partie saillante de l'un des filtres à air s'engage dans un creux de l'autre filtre à air et, ensuite, est poussée suivant une deuxième direction d'insertion, où un dernier filtre est inséré feulement suivant la première direction.

2. Procédé selon la revendication 1, **caractérisé en ce qu'**un filtre à air est utilisé, lequel filtre à air présente une partie saillante qui s'étend sur deux ou trois côtés adjacents du cadré (3).

3. Procédé selon la revendication 1 ou 2, **caractérisé en ce que** la partie saillante (4; 14; 24) est configurée comme une languette et le creux (5; 15; 25) comme une rainure.

4. Procédé selon l'une quelconque des revendications 1 à 3, **caractérisé en ce que** la partie saillante (14) est formée par un profilé en forme de L.

5. Procédé selon l'une quelconque des revendications 1 à 4, **caractérisé en ce que** le creux (15) est formé par un profilé en forme de L.

6. Procédé selon l'une quelconque des revendications précédentes, **caractérisé en ce que** la partie saillante (24) présente un profilé configuré comme un cercle partiel et le creux (25) présente un profilé en forme de C.

7. Procédé selon l'une quelconque des revendications précédentes, **caractérisé en ce que** la partie saillante et lue creux forment un type d'assemblage clipsé et/ou **en ce que** la partie saillante s'engage derrière une zone du creux.

8. Procédé selon l'une quelconque des revendications précédentes, **caractérisé en ce que** la partie saillante présente une section sensiblement de forme rectangulaire.

9. Procédé selon l'une quelconque des revendications précédentes, **caractérisé en ce que** le cadre est configuré comme une pièce en matière plastique moulée par injection.

10. Procédé selon l'une quelconque des revendications précédentes, **caractérisé en ce que** le cadre présente deux côtés configurés comme des languettes, côtés qui servent, dans le logement du filtre, au logement, au guidage et à la fixation dans des creux configurés comme des rainurés.
